# EUROPÄISCHE PATENTSCHRIFT

(11) **EP 2 766 247 B1**
(45) Veröffentlichungstag und Bekanntmachung des Hinweises auf die Patenterteilung: **08.08.2018**
(21) Anmeldenummer: 12773221.2
(22) Anmeldetag: 26.09.2012
(51) Int. Cl.: B62D 25/20, B62D 21/15

(54) **AUFBAUSTRUKTUR FÜR EIN ELEKTRISCH ANGETRIEBENES PERSONEN-KRAFTFAHRZEUG**
CHASSIS FOR AN ELECTRIC POWERED CAR
CHÂSSIS POUR VOITURE ÉLECTRIQUE

(30) Priorität: 12.10.2011 DE 102011115763
(43) Veröffentlichungstag der Anmeldung: 20.08.2014
(73) Patentinhaber: Volkswagen Aktiengesellschaft, 38440 Wolfsburg (DE)
(72) Erfinder: MALKE, Uwen, 38527 Meine (DE); JÄSCHKE, Dirk, 38446 Wolfsburg (DE)
(86) Internationale Anmeldenummer: PCT/EP2012/004029
(87) Internationale Veröffentlichungsnummer: WO 2013/053433

(56) Entgegenhaltungen:
- WO-A1-2005/102759
- WO-A1-2012/063393
- WO-A2-2012/018202
- DE-T2- 69 304 559
- JP-A- 7 081 625
- JP-A- 2000 233 648
- JP-A- 2008 174 181

## Beschreibung

Die vorliegende Erfindung betrifft eine Aufbaustruktur eines elektrisch angetriebenen Personen-Kraftfahrzeugs gemäß dem Oberbegriff des Patentanspruchs 1.

Eine derartige Aufbaustruktur beschreibt die EP 0 618 128 A1, bei der unterhalb der Sitze eines zweisitzigen Kleinkraftfahrzeugs die Traktionsbatterie angeordnet ist. Der entsprechende Batterieraum erstreckt sich quer zum Fahrzeug und beiderseits eines tragenden Mitteltunnels und ist gebildet durch einen nach oben geschlossenen Querträger mit einer wahlweise unten positionierten Batterieklappe. Der Querträger ist seitlich an die Längsträger des Kraftfahrzeugs und an den Mitteltunnel angebunden. Neben der baulich günstigen Positionierung der Traktionsbatterie ist diese Konstruktion jedoch sehr steif ausgeführt und kann Aufprallenergie insbesondere bei einem Seitenaufprall nur bedingt abbauen.

Aus der JP 2008 174181 A1 ist eine gattungsgemäße Aufbaustruktur bekannt, die zur Bildung eines Batterieraumes eine nach unten offene Schale aufweist. Zwischen einer Seitenwand der, den Batterieraum bildenden Schale und einem Karosserielängsträger ist in der Fahrzeugquerrichtung betrachtet ein Deformationsfreiraum vorgesehen, der sich in der Fahrzeuglängsrichtung erstreckt und Bestandteil einer Seitencrash-Struktur ist. Eine derartige Aufbaustruktur ist auch aus der WO 2005/102759 A1, aus der JP 7 081625 A, aus der JP 2000 233 648 A und aus der WO 2012/018202 A2 bekannt.

Die Aufgabe der Erfindung besteht darin, eine Aufbaustruktur bereitzustellen, die fertigungstechnisch einfacher ausgeführt ist, zusätzlichen Batterieraum schafft und die die Traktionsbatterie in noch größerem Umfang vor Beschädigungen bei gegebenenfalls auftretenden Fahrzeugkollisionen schützt.

Die Aufgabe ist mit den Merkmalen des Patentanspruchs 1 gelöst. Vorteilhafte und besonders zweckmäßige Weiterbildungen der Erfindung sind in den abhängigen Ansprüchen angeführt.

Erfindungsgemäß ist die Traktionsbatterie für ein elektrisch angetriebenes Fahrzeug bauraumgünstig in einem Fahrzeug-Rohbau angeordnet, der ursprünglich für verbrennerspezifische Elemente eines herkömmlichen Antriebs ausgelegt ist, wobei die Traktionsbatterie als sicherheitsrelevantes Bauteil vor Crash-Ereignissen geschützt angeordnet ist. Der verfügbare Batterieraum ist aus einem, durch den Mitteltunnel gebildeten Batteriehauptraum aufgebaut, der unterhalb der Fahrzeugsitze und/oder unterhalb der Rücksitzbank in der Fahrzeugquerrichtung nach außen mit zumindest einem Batterieteilraum erweitert ist. Dies ist dadurch realisiert, dass an den Mitteltunnel nach unten offene Schalen angesetzt sind, die vorne und hinten in den Unterboden übergehen und die über seitliche Zwischenbleche mit den Längsträgern verbunden sind, und dass in den nach unten offenen, durchgehenden Batterieraum ein selbsttragender, mit rahmenförmig umlaufenden Trägern versteifter Batteriekasten einsetzbar ist. Damit ist eine zuverlässige Batterieaufnahme mit Einbeziehung des Mitteltunnels zum Batterieraum geschaffen, die günstig in den Unterboden des Kraftfahrzeugs integriert ist, wobei durch die seitlichen Zwischenbleche zusätzlicher Deformationsraum insbesondere gegen seitliche Aufprallenergie geschaffen ist. Die Zwischenbleche können ferner zur Aufnahme von Leitungen, Einbauteilen, etc. dienen.

Zum Schutz der Batterie vor einem Seitencrash erstreckt sich der oben erwähnte Batterieteilraum nicht unmittelbar bis zu dem, den Türschweller bildenden Karosserielängsträger, sondern ist dieser vielmehr davon beabstandet ist, und zwar unter Bildung eines Deformationsfreiraums. Bei einer seitlichen Kollision wird somit zunächst der schwellerseitige Karosserielängsträger bis in den Deformationsfreiraum hinein verformt, ohne dass dabei die Batteriezellen beschädigt werden. Der Deformationsfreiraum ist in der Fahrzeugquerrichtung zwischen einer, den Batterieteilraum bildenden wannenförmigen Schale und dem Türschweller ausgebildet. Bevorzugt kann an der inneren Seite des Türschwellers ein Tragblech zur Halterung einer außenliegenden Sitzschiene vorgesehen sein. In diesem Fall kann der Deformationsfreiraum seitlich nach außen durch das Tragblech begrenzt sein. Der Deformationsraum ist in der Fahrzeuglängsrichtung in etwa rinnenförmig langgestreckt und nach unten durch ein bodenseitiges Blechteil, etwa ein Zwischenblech, begrenzt. Dabei kann sich der Deformationsfreiraum in der Fahrzeuglängsrichtung zwischen vorderen und hinteren Quer-Verstärkungsstreben des Batterieteilraums erstrecken. Diese Quer-Verstärkungsstreben können beispielhaft Profilbleche sein, die an die, den Batterieteilraum bildenden Schale jeweils vorne und hinten aufgesetzt sind. Die Quer-Verstärkungsstreben bilden zusammen mit dem Deformationsfreiraum eine Seitencrash-Struktur, die zusätzlich die Batteriezellen vor einer unfallbedingten Deformation schützen. Die Quer-Verstärkungsstreben können im Bereich des oben erwähnten Deformationsfreiraums eine reduzierte Steifigkeit aufweisen, das heißt beispielsweise mit Sollknickstellen bildenden Ausnehmungen versehen sein.

Erfindungsgemäß wird im Hinblick auf eine bauraumgünstige Anordnung der Deformationsfreiraum als Bauraum allgemein zur Unterbringung von nicht crash-sensiblen Bauteilen, das heißt eines Belüftungskanals genutzt, mit dem die Raumluft im Kraftfahrzeug-Fond konditionierbar ist. Der Belüftungskanal ist bevorzugt ein Kunststoff-Bauteil, das als deformierbares Element zusätzlich Verformungsenergie abbaut, die bei einem Seitencrash in die Fahrzeugkarosserie eingebracht wird.

Die oben erwähnten Quer-Verstärkungsstreben können in der Fahrzeugquerrichtung an den Mitteltunnel und an die seitlichen Längsträger anschließen und bei geringem fertigungstechnischen Aufwand den Batterieraum in Fahrzeugquerrichtung weiter aussteifen.

An das, den Deformationsfreiraum bodenseitig begrenzende Zwischenblech kann ein äußeres, mit dem Längsträger und dem Zwischenblech fest verbundenes Tragblech für die außen liegende Sitzschiene der Sitze aufgesetzt sein. Das Tragblech bildet somit neben seiner den Sitz tragenden Funktion mit dem darunter positionierten Zwischenblech in einfacher Weise einen zusätzliche Aufprallenergie absorbierenden Träger.

Die jeweils innere Sitzschiene der Sitze kann vorteilhaft am Mitteltunnel und/oder auf den Schalen befestigt sein. Ferner kann der die Traktionsbatterie aufnehmende Batteriekasten einen auf die Tragstruktur aufgesetzten, diesen vollständig gegenüber dem Batterieraum abschließenden Deckel aufweisen, der unter anderem den Vorteil hat, dass keine von den Batteriezellen ausgehende Wärme auf den Unterboden übertragen wird. Insbesondere kann der Deckel mit einem definierten Abstand zum Batterieraum angeordnet sein.

Zusätzlich können die den Batterieraum teilweise begrenzenden Schalen an ihrer den Sitzen zugewandten Oberseite mit aussteifenden Einprägungen versehen sein, insbesondere durch bandförmige Einprägungen, die in Fahrzeugquerrichtung ausgerichtet sind und quasi ohne fertigungstechnischen Mehraufwand den Batterieraum weiter aussteifen.

Besonders bevorzugt kann der Mitteltunnel die angesetzten Schalen nach oben überragen, wobei der Batteriekasten im Querschnitt betrachtet in den dadurch im mittleren Bereich gebildeten, höheren Batterieraum einragt und ein entsprechend angepasstes, größeres Batteriepaket aufweisen kann. Dies stellt eine sehr effiziente Nutzung des gesamten Batterieraums mit Anordnung einer höchstmögliche Kapazität aufweisenden Traktionsbatterie sicher.

Schließlich kann der Mitteltunnel mit zumindest den angesetzten Schalen, den Zwischenblechen und den Tragblechen ein Modul bilden, das mit einer im übrigen für ein Kraftfahrzeug mit verbrennungsmotorischem Antrieb konzipierten Aufbaustruktur kompatibel ist. Daraus resultiert insbesondere bei einer Serienfertigung von Kraftfahrzeugen des gleichen Typs mit herkömmlichem Antrieb und Elektroantrieb der Vorteil, dass nahezu die gleichen Karosseriebauteile für beide Antriebsarten verwendbar sind. Bei Elektroantrieb ist lediglich der Unterboden im Bereich der Vordersitze wie vorstehend beschrieben modifiziert und kann unter Beibehaltung der ergonomischen Auslegungen (Sitzhöhe, Sitzposition, Fußauflage vor den Sitzen, etc.) verbaut werden. Der Vorbau und Heckbereich der Karosserie können im Wesentlichen unverändert bleiben; der erforderliche Batterieraum ist teils im Mitteltunnel und teils unterhalb der Sitze vorteilhaft gebildet.

Ein Ausführungsbeispiel der Erfindung ist im Folgenden mit weiteren Einzelheiten näher erläutert. Die schematische Zeichnung zeigt in:
- Fig. 1: in einer Ansicht von oben eine Übersichtsskizze eines Fahrzeug-Unterbodens;
- Fig. 2: in raumbildlicher Darstellung den mittleren Abschnitt des Unterbodens eines PKW mit Elektroantrieb und mit einer quer unterhalb des Unterbodens und eines Mitteltunnels angeordneten Traktionsbatterie;
- Fig. 3: einen senkrechten Querschnitt entlang der Schnittebene I-I aus der Fig. 1 durch den Unterboden;
- Fig. 4: ebenfalls in raumbildlicher Darstellung eine teilweise Seitenansicht des Unterbodens mit Mitteltunnel des PKW nach Fig. 2; und
- Fig. 5: einen senkrechten Längsschnitt entlang der Schnittebene II-II aus der Fig. 1 durch den Unterboden und die Traktionsbatterie.

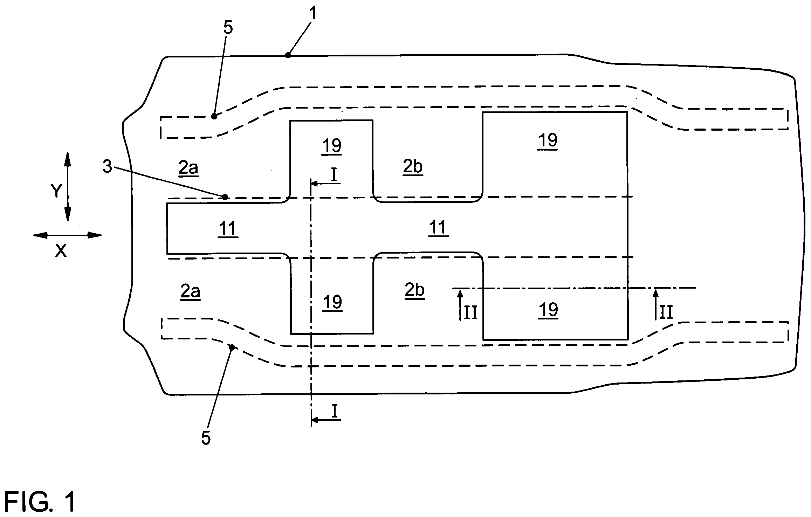

In der Fig. 1 ist anhand einer grob schematischen Überblicksskizze der Unterboden eines elektrisch angetriebenen Fahrzeugs von oben gezeigt. Der Unterboden 1 ist aus Gründen der Übersichtlichkeit sowie zur Erläuterung der wesentlichen Aspekte der Erfindung nur stark vereinfacht gezeigt. So ist der Unterboden 1 mit zwei in der Fahrzeugquerrichtung y seitlich gegenüberliegenden Längsträgern 5 sowie einem Mitteltunnel 3 aufgebaut. Sowohl der Mitteltunnel 3 als auch die beiden Längsträger 5 sind nur gestrichelt angedeutet. Der Mitteltunnel 3 definiert einen in der Fahrzeuglängsrichtung x langestreckten Batteriehauptraum 11, der in der Fahrzeugquerrichtung y mit Batterieteilräumen 19 seitlich erweitert ist. Die Batterieteilräume 19 erstrecken sich unterhalb von, in der Fig. 1 nicht gezeigten Fahrzeugsitzen bzw. einer Rücksitzbank.

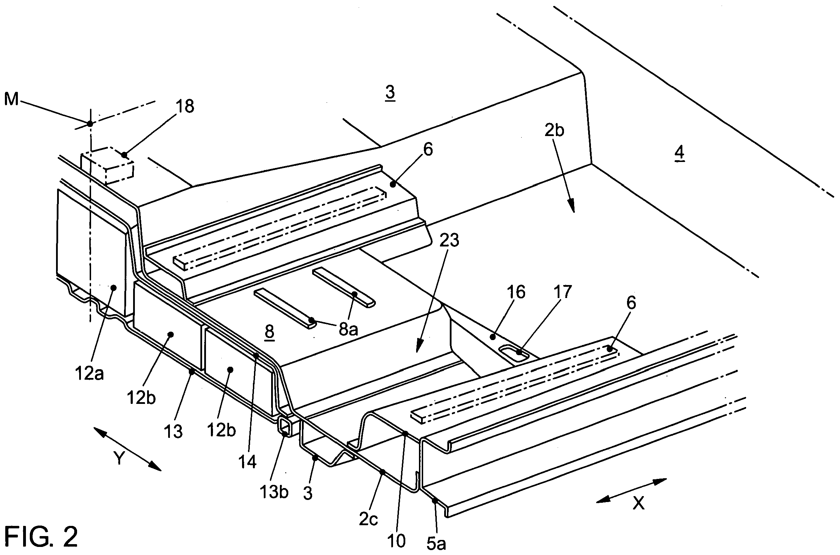

In den Fig. 2 bis 5 ist der Unterboden 1 für das Personenkraftfahrzeug mit Vordersitzen und Fondsitzen (nicht dargestellt) im Rohbauzustand gezeigt. Der Unterboden 1 ist im Wesentlichen aus einem mit Sicken versteiften Bodenblech 2 und dem nach oben abragenden, in der Fahrzeuglängsrichtung x verlaufenden Mitteltunnel 3 zusammengesetzt.

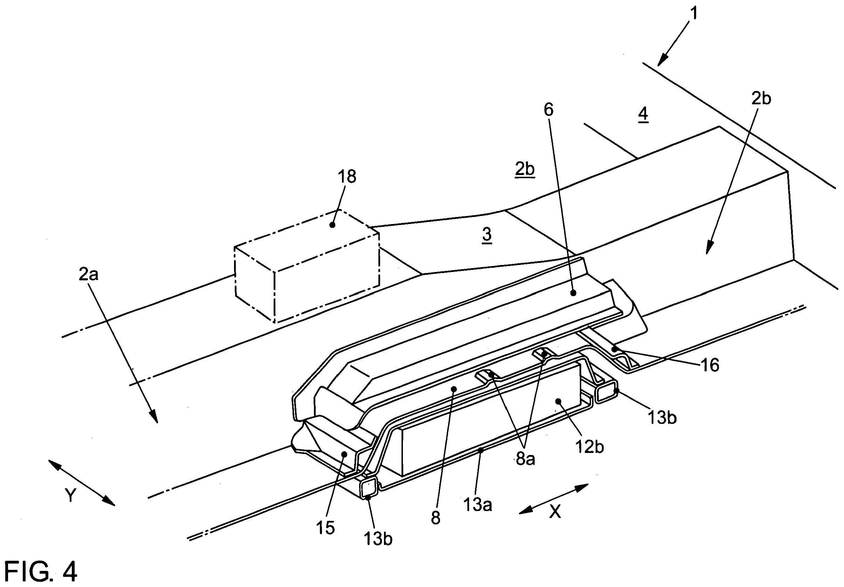

Nach vorne bildet das Bodenblech 2 (siehe Fig. 4) den Fußraum 2a der Frontpassagiere und nach hinten den Fußraum 2b für die Fondpassagiere. Das vordere Bodenblech 2a geht in nicht dargestellter, üblicher Weise in die vordere Spritzwand bzw. den Vorbau über, während an den hinteren Abschnitt 2b ein erhöhter Heckquerträger 4 anschließt, an den auch der Mitteltunnel 3 angebunden ist.

Das wannenförmig geformte Bodenblech 2 (vgl. Fig. 1 und 2) erstreckt sich seitlich in der Fahrzeugquerrichtung y bis zu den seitlichen Längsträgern (Schwellern) 5, die jeweils aus einem U-förmigen Innenprofil 5a und einem Außenblech 5b gebildet sind.

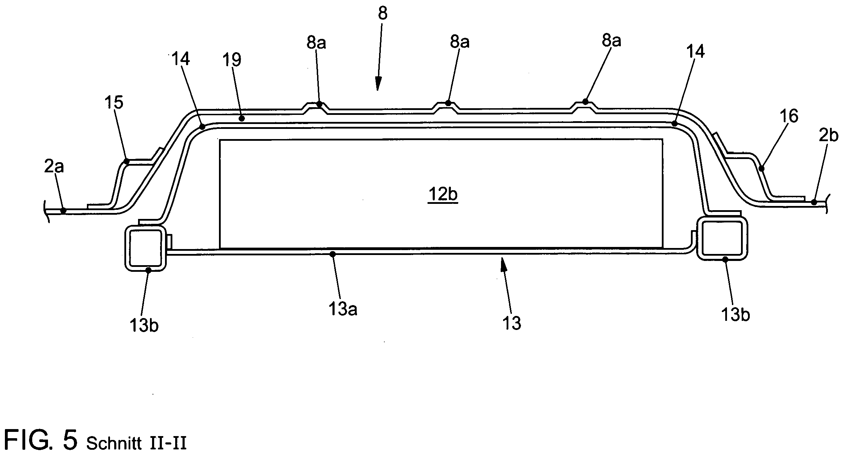

Die Positionierung der Vordersitze ist in der Fig. 2 und 5 durch die inneren Sitzschienen 6 verdeutlicht. Im Bereich dieser Vordersitze sind in den Unterboden 2 der in der Draufsicht rechteckförmige, quer verlaufende und nach unten offene Batterieteilräume 19 (Fig. 2 und 4) eingeformt. Die Batterieteilräume 19 sind durch umgekehrt wannenförmige Schalen 8 gebildet und gehen in den vom Mitteltunnel 3 definierten Batteriehauptraum 11 über.

Die Schalen 8 können unmittelbar an den Mitteltunnel 3 in etwa in dessen mittlerer Höhe und an das Bodenblech 2 angeformt sein, wobei an die Schalen 8 in der Fahrzeugquerrichtung y nach außen Zwischenbleche 2c (Fig. 2) anschließen, die an die seitlichen Längsträger 5 angebunden sind. Die Sitzschienen 6 sind dabei (Fig. 2) am Mitteltunnel 3 und auf den Schalen 8 befestigt. Ferner kann oberseitig am Mitteltunnel 3 in üblicher Weise eine Gangschaltvorrichtung 18 angeordnet sein. An die Zwischenbleche 2c sind von unten U-förmige Hohlprofile 9 angeschweißt, die zur Verstärkung der Karosserie dienen.

Parallel zu den Belüftungskanälen 25 sind auf die Zwischenbleche 2c ebenfalls an den Längsträgern 5 befestigte Tragbleche 10 aufgesetzt, die die nur angedeuteten, äußeren Sitzschienen 6 der Vordersitze (Fig. 2) aufnehmen.

In den nach unten offenen, von dem Mitteltunnel 3 und den Schalen 8 begrenzten Batteriehaupt- und -teilräumen 11, 19 ist eine Traktionsbatterie 12, zum Beispiel eine Lithium-Ionen-Batterie eingesetzt, deren Zellenpakete 12a, 12b auf einem selbsttragenden Batteriekasten 13 angeordnet sind.

Der Batteriekasten 13 weist im Wesentlichen eine tragende Bodenplatte 13a und umlaufend angeordnete, aus Hohlprofilen gebildete Träger 13b auf und ist mittels eines an den Trägern 13b befestigten Deckels 14 nach oben abgeschlossen. Wie aus Fig. 2 ersichtlich ist, ist das mittlere Batteriepaket 12a höher ausgelegt und ragt somit unter effizienter Ausnutzung der gegebenen Raumverhältnisse in den hier größeren Batteriehauptraum 11 ein.

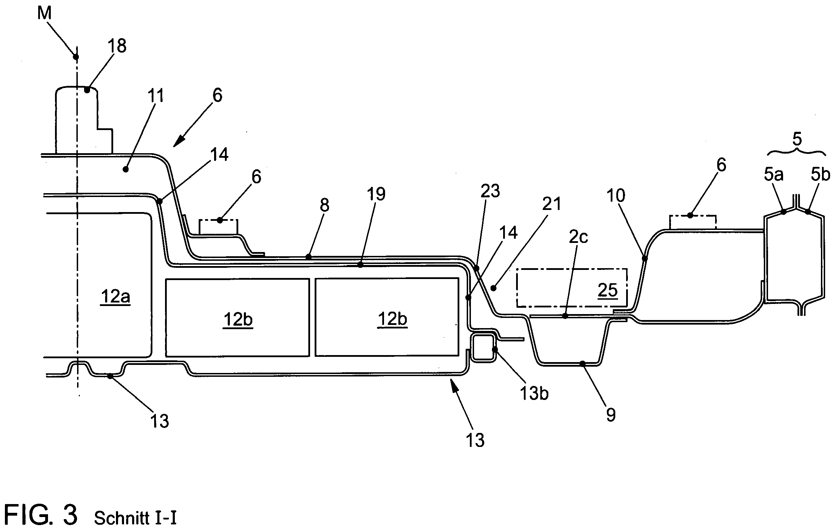

Der Batteriekasten 13 mit der Traktionsbatterie 12 und dem Deckel 14 ist am Unterboden 2 des Kraftfahrzeugs befestigt (nicht dargestellt). Dessen Ausmaße sind so ausgelegt, dass wie insbesondere aus den Fig. 2 und 3 ersichtlich ist, ein isolierender Spalt zwischen dem Batterieraum 11 und dem Deckel 14 verbleibt, um gegebenenfalls Wärmeübertragungen auszuschließen.

Der elektrische Anschluss der Traktionsbatterie 12 an das Bordnetz des Kraftfahrzeugs und dessen Kühlung sind hier nicht dargestellt, bilden aber eine autarke Einheit, die über entsprechende Anschlussstellen anschließbar ist.

Die von den Schalen 8 begrenzten Batterieteilräume 19 sind in der Fahrzeugquerrichtung y durch Profilbleche 15, 16 (Fig. 2 und 4) versteift, die an die Bodenbleche 2a, 2b und an die Schalen 8 angeschweißt sind und somit entsprechende Querträger bilden. Die Profilbleche 15, 16 schließen dabei jeweils an den Mitteltunnel 3 und an die Innenbleche 5a der seitlichen Längsträger 5 an bzw. sind mit diesen verschweißt. Zudem sind die Profilbleche 15, 16 in der Fahrzeugquerrichtung y außerhalb der Schalen 8 mit, Sollknickstellen bildenden Ausnehmungen 17 versehen. Ferner sind in die Schalen 8 aussteifende, bandförmige Einprägungen 8a eingeformt, die wie ersichtlich ist ebenfalls in der Fahrzeugquerrichtung y verlaufen.

Bei der im Batterieraum 11, 19 angeordneten Traktionsbatterie ist insbesondere bei einem Seitencrash zu gewährleisten, dass sich deren Batteriezellen nicht deformieren. Zum Schutz der Traktionsbatterie ist gemäß den Figuren 2 und 3 zwischen dem Batterieteilraum 19 und dem, den Türschweller bildenden Karosserielängsträger 5 ein Deformationsfreiraum 21 vorgesehen. Der Deformationsfreiraum 21 erstreckt sich gemäß den Fig. 2 und 3 in etwa rinnenförmig entlang des Batterieteilraumes 19 in der Fahrzeuglängsrichtung x. Im Deformationsfreiraum 21 verläuft gemäß der Fig. 3 ein angedeuteter Belüftungskanal 25, der an einer Luftkonditioniereinrichtung (Klimaanlage) angeschlossen ist und zum Fondraum des Kraftfahrzeuges verläuft. Der Deformationsfreiraum 21 ist gemäß der Fig. 3 in der Fahrzeugquerrichtung y zwischen einer Seitenwand 22 der den Batterieteilraum 19 bildenden Schale 8 und dem Tragblech 10 für die außenseitige Sitzschiene 6 begrenzt. Bodenseitig ist der Deformationsfreiraum 21 durch das Zwischenblech 2c begrenzt. Der Deformationsfreiraum 21 erstreckt sich in der Fahrzeuglängsrichtung x zwischen den vorderen und hinteren Quer-Verstärkungsstreben 15, 16 der den Batterieteilraum 19 definierenden Schale 8.

Der Deformationsfreiraum 21 bildet zusammen mit dem darin angeordneten Belüftungskanal 25 sowie den vorderen und hinteren Quer-Verstärkungsstreben 15, 16 eine Seitencrashstruktur, bei der die seitliche Aufprallenergie im Crashfall abgebaut werden kann, ohne dass es zu einer Beschädigung der Traktionsbatterie 12 kommt. Bei einem Seitencrash erfolgt somit der Abbau der seitlichen Aufprallenergie alleine durch die Intrusion des Karosserielängsträgers 5 bis in den Deformationsfreiraum 21 hinein. Der im Deformationsfreiraum 21 angeordnete Belüftungskanal 25 bildet dabei ein zusätzliches deformierbares Element, das zusätzlich Aufprallenergie abbaut.

Der Mitteltunnel 3 mit den angeformten Schalen 8, den Zwischenblechen 2c und den Tragblechen 10 kann als ein Modul ausgebildet sein, das mit einer im übrigen für ein Kraftfahrzeug mit verbrennungsmotorischen Antrieb konzipierten Aufbaustruktur kompatibel ist; das heißt, dass die besagten Teile im Übrigen Anschlussgeometrien aufweisen, mit denen sie an einen vorhandenen Vorbau und Heckbereich eines Kraftfahrzeugs angebaut werden können. Damit können fertigungstechnisch günstig Aufbauten für Kraftfahrzeuge gleichen Typs mit verbrennungsmotorischem Antrieb und elektromotorischem Antrieb und wie vorbeschrieben integrierter Traktionsbatterie 12 gefertigt werden.

Die beschriebene Aufbaustruktur schützt die Traktionsbatterie 12 weitgehend sowohl bei Front- oder Heckkollisionen und zusätzlich in besonderem Maße auch bei Seitenkollisionen vor Beschädigung und stellt einen durchgehenden Batterieraum 11 zum Einbau einer Traktionsbatterie 12 relativ großer Kapazität bereit.

### Bezugszeichenliste

- 1: Unterboden
- 2: Bodenblech
- 2a: vorderer Fußbereich
- 2b: hinterer Fußbereich
- 2c: Zwischenblech
- 3: Mitteltunnel
- 4: Heckquerträger
- 5: Längsträger
- 5a: Innenprofil
- 5b: Außenblech
- 6: Sitzschiene
- 8: Schalen
- 8a: Einprägungen
- 9: Hohlprofil
- 10: Tragblech
- 11: Batteriehauptraum
- 12: Traktionsbatterie
- 12a, 12b: Zellenpakete
- 13: Batteriekasten
- 13a: Bodenplatte
- 13b: Träger
- 14: Batteriedeckel
- 15, 16: Quer-Verstärkungsstreben
- 17: Ausnehmungen
- 18: Gangschaltvorrichtung
- 19: Batterieteilräume
- 21: Deformationsfreiraum
- 22: Seitenwand
- 25: Belüftungskanal
- M: Längsmittelebene

## Patentansprüche

1. Aufbaustruktur eines elektrisch angetriebenen Personen-Kraftfahrzeugs, die einen in einem Unterboden (1) unterhalb von Fahrzeugsitzen integrierten Batterieraum (11, 19) aufweist, in dem eine Traktionsbatterie (12) angeordnet ist, wobei der Batterieraum einen, von einem in der Fahrzeuglängsrichtung (x) verlaufenden Mitteltunnel (3) gebildeten Batteriehauptraum (11) aufweist, in den die Traktionsbatterie (12) hinein ragt und der unterhalb der Fahrzeugsitze in der Fahrzeugquerrichtung (y) mit zumindest einem Batterieteilraum (19) erweitert ist, wobei zur Bildung des Batterieteilraumes (19) an dem Mitteltunnel (3) zumindest eine nach unten offene Schale (8) angesetzt ist, die vorne und hinten in den Unterboden (1) übergeht und die über seitliche Zwischenbleche (2c) mit den Längsträgern (5) verbunden ist, wobei zum Schutz der Batterie (12) vor einem Seitencrash in der Fahrzeugquerrichtung (y) zwischen einer Seitenwand (23) der den Batterieteilraum (19) bildenden Schale (8) und dem, den Türschweller bildenden Karosserielängsträger (5) ein Deformationsfreiraum (21) vorgesehen ist, der nach unten durch ein bodenseitiges Blechteil begrenzt ist und rinnenförmig in der Fahrzeuglängsrichtung (x) langgestreckt ist, **dadurch gekennzeichnet, dass** im Deformationsfreiraum (21) ein Belüftungskanal (25) einer Belüftungseinrichtung verläuft.

2. Aufbaustruktur nach Anspruch 1, **dadurch gekennzeichnet, dass** der Deformationsfreiraum (21) in der Fahrzeugquerrichtung (y) zwischen der Seitenwand (23) der den Batterieteilraum (19) bildenden Schale (8) und einem am Karosserielängsträger (5) befestigten Tragblech (10) zur Halterung einer Sitzschiene (6), begrenzt ist.

3. Aufbaustruktur nach Anspruch 1 oder 2, **dadurch gekennzeichnet, dass** sich der Deformationsfreiraum (21) in der Fahrzeuglängsrichtung (x) zwischen vorderen und hinteren Quer-Verstärkungsstreben (15, 16) des Batterieteilraums (19) erstreckt.

4. Aufbaustruktur nach Anspruch 3, **dadurch gekennzeichnet, dass** die Quer-Verstärkungsstreben (15, 16) Profilbleche sind, die an die den Batterieteilraum (19) bildenden Schale (8) vorne und hinten aufgesetzt sind, und dass die Quer-Verstärkungsstreben (15, 16) an den Mitteltunnel (3) und an die seitlichen Längsträger (5) anschließen.

5. Aufbaustruktur nach Anspruch 3 oder 4, **dadurch gekennzeichnet, dass** die Quer-Verstärkungsstreben (15, 16) in der Fahrzeugquerrichtung (y) außerhalb des Batterieteilraumes (19) mit zumindest einer, eine Sollknickstelle bildenden Ausnehmung (17) versehen sind.

6. Aufbaustruktur nach einem der Ansprüche 2 bis 5, **dadurch gekennzeichnet, dass** an die, den Deformationsfreiraum (21) bodenseitig begrenzenden Blechteile (2c) jeweils ein U-förmiges Profilblech (9) zur Verstärkung der Karosserie angebunden ist, und/oder dass die jeweils innere Sitzschiene (6) der Sitze am Mitteltunnel (3) und/oder auf der Schale (8) befestigt ist.

7. Aufbaustruktur nach einem der vorhergehenden Ansprüche, **dadurch gekennzeichnet, dass** die Batteriehaupt- und -teilräume (11, 19) in der Fahrzeughochrichtung (z) nach unten offen sind, und dass insbesondere in den nach unten offenen Batterieräumen (11, 19) ein Batteriekasten (13, 14) einsetzbar ist.

## Claims

1. Body structure of an electrically driven passenger motor vehicle, which has a battery compartment (11, 19) which is integrated in an underbody (1) below vehicle seats and in which a traction battery (12) is arranged, wherein the battery compartment has a main battery compartment (11) which is formed by a centre tunnel (3) running in the longitudinal direction (x) of the vehicle and into which the traction battery (12) projects and which is extended below the vehicle seats in the transverse direction (y) of the vehicle by at least one battery sub-compartment (19), wherein, in order to form the battery sub-compartment (19), at least one downwardly open shell (8) is attached to the centre tunnel (3) and merges at the front and rear into the underbody (1) and is connected via lateral intermediate plates (2c) to the longitudinal members (5), wherein, in order to protect the battery (12) against a side crash, a free deformation space (21) is provided in the transverse direction (y) of the vehicle between a side wall (23) of the shell (8) forming the battery sub-compartment (19) and the body longitudinal member (5) forming the door sill, said free deformation space being downwardly bounded by a sheet-metal part on the floor side and being extended in the form of a channel in the longitudinal direction (x) of the vehicle, **characterized in that** a ventilation duct (25) of a ventilation device runs in the free deformation space (21).

2. Body structure according to Claim 1, **characterized in that** the free deformation space (21) is delimited in the transverse direction (y) of the vehicle between the side wall (23) of the shell (8) forming the battery sub-compartment (19) and a supporting plate (10), which is fastened to the body longitudinal member (5), for holding a seat rail (6) .

3. Body structure according to Claim 1 or 2, **characterized in that** the free deformation space (21) extends in the longitudinal direction (x) of the vehicle between front and rear transverse reinforcing struts (15, 16) of the battery sub-compartment (19).

4. Body structure according to Claim 3, **characterized in that** the transverse reinforcing struts (15, 16) are profiled plates which are placed at the front and rear onto the shell (8) forming the battery sub-compartment (19), and **in that** the transverse reinforcing struts (15, 16) adjoin the centre tunnel (3) and the lateral longitudinal members (5).

5. Body structure according to Claim 3 or 4, **characterized in that** the transverse reinforcing struts (15, 16) are provided with at least one recess (17), which forms a predetermined buckling point, outside the battery sub-compartment (19) in the transverse direction (y) of the vehicle.

6. Body structure according to one of Claims 2 to 5, **characterized in that** a U-shaped profiled plate (9) for reinforcing the body is connected in each case to the sheet-metal parts (2c) delimiting the free deformation space (21) on the floor side, and/or **in that** the in each case inner seat rail (6) of the seats is fastened to the centre tunnel (3) and/or on the shell (8).

7. Body structure according to one of the preceding claims, **characterized in that** the main battery compartment and battery sub-compartment (11, 19) are downwardly open in the vertical direction (z) of the vehicle, and **in that** in particular a battery box (13, 14) is insertable into the downwardly open battery compartments (11, 19).

## Revendications

1. Structure de carrosserie pour un véhicule de tourisme électrique, qui présente un compartiment de batterie (11, 19) intégré dans un dessous de carrosserie (1) en dessous des sièges du véhicule, dans lequel est disposée une batterie de traction (12), le compartiment de batterie présentant un compartiment principal de batterie (11) formé par un tunnel central (3) s'étendant dans la direction longitudinale du véhicule (x), dans lequel pénètre la batterie de traction (12) et qui est élargi en dessous des sièges du véhicule dans la direction transversale du véhicule (y) avec au moins un compartiment partiel de batterie (19), au moins une coque ouverte vers le bas (8) étant posée sur le tunnel central (3) pour former le compartiment partiel de batterie (19), laquelle se prolonge en avant et en arrière par le dessous de carrosserie (1) et est connectée aux longerons (5) par le biais de tôles intermédiaires latérales (2c), un espace libre de déformation (21) étant prévu pour protéger la batterie (12) contre une collision latérale dans la direction transversale du véhicule (y) entre une paroi latérale (23) de la coque (8) formant le compartiment partiel de batterie (19) et le longeron de carrosserie (5) formant le soubassement de porte, lequel espace libre de déformation est limité vers le bas par une pièce en tôle du côté du plancher et est allongé en forme de rigole dans la direction longitudinale du véhicule (x), **caractérisée en ce qu'**un canal de ventilation (25) d'un dispositif de ventilation s'étend dans l'espace libre de déformation (21).

2. Structure de carrosserie selon la revendication 1, **caractérisée en ce que** l'espace libre de déformation (21) est limité dans la direction transversale du véhicule (y) entre la paroi latérale (23) de la coque (8) formant le compartiment partiel de batterie (19) et une tôle de support (10) fixée au longeron de la carrosserie (5) pour la fixation d'un rail de siège (6).

3. Structure de carrosserie selon la revendication 1 ou 2, **caractérisée en ce que** l'espace libre de déformation (21) s'étend dans la direction longitudinale du véhicule (x) entre des renforts transversaux avant et arrière (15, 16) du compartiment partiel de batterie (19).

4. Structure de carrosserie selon la revendication 3, **caractérisée en ce que** les renforts transversaux (15, 16) sont des tôles profilées qui sont posées à l'avant et à l'arrière sur la coque (8) formant le compartiment partiel de batterie (19), et **en ce que** les renforts transversaux (15, 16) se raccordent au tunnel central (3) et aux longerons latéraux (5).

5. Structure de carrosserie selon la revendication 3 ou 4, **caractérisée en ce que** les renforts transversaux (15, 16) sont pourvus dans la direction transversale du véhicule (y) à l'extérieur du compartiment partiel de batterie (19) d'au moins un évidement (17) formant un point de flexion de consigne.

6. Structure de carrosserie selon l'une quelconque des revendications 2 à 5, **caractérisée en ce qu'**une tôle profilée en forme de U (9) pour le renfort de la carrosserie est à chaque fois reliée aux parties en tôle (2c) délimitant du côté du fond l'espace libre de déformation (21), et/ou **en ce que** le rail de siège interne respectif (6) des sièges est fixé au tunnel central (3) et/ou à la coque (8).

7. Structure de carrosserie selon l'une quelconque des revendications précédentes, **caractérisée en ce que** les compartiments principal et partiel de batterie (11, 19) dans la direction verticale du véhicule (z) sont ouverts vers le bas, et **en ce que** notamment dans les compartiments de batterie ouverts vers le bas (11, 19) peut être inséré un caisson de batterie (13, 14).
